# EUROPÄISCHE PATENTANMELDUNG

(11) **EP 1 054 372 A2**
(43) Veröffentlichungstag der Anmeldung: **22.11.2000**
(21) Anmeldenummer: 99120608.7
(22) Anmeldetag: 18.10.1999
(51) Int. Cl.: G09B 17/02

(54) **Leselernhilfe**

(30) Priorität: 21.05.1999 DE 19923562
(71) Anmelder: Butz, Ulrich, 76131 Karlsruhe (DE)
(72) Erfinder: Butz, Ulrich, 76131 Karlsruhe (DE)
(74) Vertreter: Pietruk, Claus Peter, Dipl.-Phys.

(57) **Zusammenfassung**

Beschrieben wird eine Leselernhilfe zum Auflegen auf einen zu lesenden Text mit einem ersten Feld, durch welches ein zu lesender Text mit hohem Kontrast gut zu erkennen ist, und einem zweiten Feld, durch welches später zu lesender Text in der Nähe des ersten Textes mit verringertem Kontrast zu erkennen ist, wobei nahe des unter dem ersten transparenten Feld sichtbaren Textes erste und zweite Buchstabenerkennungshilfen angeordnet sind, die zur Assoziation mit zwei vom Lernenden miteinander verwechselbaren Buchstaben ausgestaltet sind. Dieses Anti-Legasthenie-Mittel zur Alphabetisierung ist geeignet für Legastheniker.

## Beschreibung

Die vorliegende Erfindung betrifft eine Leselernhilfe.

Lesen zu können ist in unserer Kulturgesellschaft eine der wichtigsten Fähigkeiten überhaupt. Daß das Erlernen dieser Fähigkeit in bestimmten Fällen Schwierigkeiten macht, wird angesichts der Selbstverständlichkeit, mit der auch in Problemfällen nach einer Weile gelesen werden kann, in der Regel zwar schnell vergessen, aber dennoch ist die Förderung des Lernprozesses in vielen Fällen sinnvoll. So besteht nicht nur bei leseschwachen Kindern das Bedürfnis, diese trotz ihrer Legasthenie an die Lesefähigkeit heran zu führen; vielmehr ist es auch bei normal begabten Kindern erwünscht, diesen schneller zu Erfolgen beim Lesenlernen zu verhelfen.

Es ist bekannt, daß bei Leseanfängern bestimmte Lesefehler in besonderem Maß verbreitet sind. So ist nach Biscaldi und Otto in 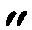 Zeitschrift des Bundesverbandes Legasthenie" 1995, S.4-5 m.w.N. bekannt, daß die Fähigkeit, einen Punkt ruhig zu fixieren, bei leseschwachen Menschen eingeschränkt ist. Beim Lesen wechseln sich Blicksprünge und Fixationen immer wieder ab. Während der Fixation wird unter Hemmung der Augenbewegung die visuelle Information aufgenommen und verarbeitet. Danach muß der Blick auf die nächste zu erfassende Stelle springen, wobei es für die Erkennung besonders vorteilhafte Blicklandepunkte in Wörtern gibt. Die Hemmung der Augenbewegung und die Koordination von Fixationen und Blicksprüngen ist bei vielen Leseanfängern unzureichend, so daß der Blick weder lange genug zum Erkennen ruht, noch die günstigsten Blicklandepunkte getroffen werden.

Eine weitere, verbreitete Beeinträchtigung des Lesevermögens beruht nach H. Irvin, 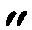 Zeitschrift des Bundesverbandes Legasthenie" 1998, S. 7, darauf, daß beim Lesen der Text verformt oder bewegt wahrgenommen wird. Dabei können die weißen Textseitenbereiche durch die schwarzen Textteile visuell überstrahlt werden. Diese Art von Störungen soll sich durch großflächiges Abdecken der Seite mit farbigen Folien beseitigen lassen. Auch kommt es nach Eden, Nature 382, S. 66-69 zu einem Verschmieren oder Überlappen von Bildern, so daß beim Lesen die Buchstaben nicht hinreichend getrennt werden.

Zur Verbesserung der Textwahrnehmung ist auch vorgeschlagen worden, kontrastreiche und gut gedruckte Vorlagen zu verwenden, vgl. Schäfer, Z. prakt. Augenheilkunde, 200 (1992) 1033-109.

Nach M. Fahle, Z. prakt. Augenheilkunde 18:111-116 (1997) fanden Geiger und Lettvin, daß sich die Einzel-Buchstabenwahrnehmung bei legasthenischen Patienten vom Zentrum zur Peripherie hin langsamer verschlechtere als bei Normalpersonen, insbesondere für die rechte Gesichtsfelperipherie, also das Lesegesichtsfeld. Es soll eine Reizüberflutung durch zu viele Buchstaben resultieren und es wird eine starre Schablone vorgeschlagen, um einzelne Wörter freizugeben.

Es ist in einer früheren Patentanmeldung des Anmelders bereits eine Lese- und Schreiblernhilfe vorgeschlagen worden, bei der zur Unterscheidung zweier miteinander verwechselbarer Buchstaben oder Buchstabengruppen jeweils ein Grundkörper vorgesehen ist, der zwei verschiedene Begriffssymbole darstellt, in denen jeweils einer der beiden miteinander verwechselbaren Buchstaben als prägender Bestandteil enthalten ist, wobei das eine der beiden Begriffssymbole im Unterschied zu dem anderen mit einer ertastbaren Struktur versehen ist. Als Beispiel wurde dort die Buchstabengruppe 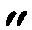 b" und 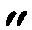 d" als 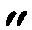 Ball" und 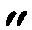 dose" symbolisiert; diese Buchstaben sind nicht nur schriftbildlich wegen ihrer Symmetrie zueinander leicht miteinander verwechselbar, sondern liegen auch bei der Aussprache eng beieinander, was die Unterscheidung besonders erschwert.

Es wurde im vorbenannten Dokument erkannt, daß möglichst viele Sinneskanäle im Gehirn gleichzeitig angesprochen werden müssen, damit möglichst viele Wahrnehmungs- und Assoziationsfelder der Großhirnrinde in die Informationsspeicherung einbezogen werden, wobei der taktilen Wahrnehmung (haptischer Bereich) bei der Verankerung und Verinnerlichung besondere Bedeutung zukommen soll.

Die Aufgabe der vorliegenden Erfindung besteht darin, Neues für die gewerbliche Anwendung bereit zu stellen; insbesondere, jedoch nicht ausschließlich, soll ein verbessertes technisches Hilfsmittel angegeben werden, das schnellere Fortschritte beim Lernen ermöglicht.

Die Lösung dieser Aufgabe wird unabhängig beansprucht. Bevorzugte Ausführungsformen werden abhängig beansprucht.

Damit schlägt die Erfindung zunächst vor, ein Alphabetisierungsmittel, d.h. eine Leselernhilfe zum Auflegen auf einen zu lesenden Text vor, mit einem ersten Feld, durch welches zumindest ein Teil einer zu lesenden Textzeile gut und mit hohem Kontrast zu erkennen ist, einem zweiten Feld, durch welches später zu lesender Text in der Nähe des ersten Textteiles mit verringertem Kontrast und/oder schlechter zu erkennen ist, sowie einem Schieber, der dazu ausgebildet ist, mit dem Finger längs der zu lesenden Textzeile verschoben zu werden und dabei Teile des ersten Feldes abzugrenzen.

Mit einer derartigen Leselernhilfe werden gemäß einem wesentlichen Aspekt der Erfindung die beschriebenen Blicksprünge zunächst reduziert, da die Felder unterschiedlichen Kontrastes eine leichte Abgrenzung von jetzt zu lesendem und später zu lesendem Text ermöglichen. Zugleich reduzieren die unterschiedlichen Kontrastierungen auch noch Überstrahlungen und verbessern so die Textwahrnehmung deutlich. Dies allein trägt schon zu einer beachtlichen Verringerung der zu erwartenden Blicksprünge und zu verlängerten Fixationen bei, so daß das Leseergebnis schon dadurch verbessert ist. Die Erfindung beschränkt sich aber nicht einfach darauf, die visuelle Textwahrnehmung zu fördern und zu unterstützen. Vielmehr werden durch den mittels Finger beweglichen Schieber die Fixationen kompensiert und der Texterkennung eine im wörtlichen Sinne erfassende Komponente verliehen, die dazu beiträgt, daß sich mit den rein visuellen Eindrücken des Lesens weitere, nichtvisuelle assoziieren. So wird etwa die Länge eines Wortes allein durch das Bewegen des Schiebers erfaßbar. Außerdem kann die Leselernhilfe bei lautadditiven Leselernverfahren unterstützend zum Hörvorgang über die Betätigung des Schiebers sichtbar gemacht werden, indem das Wort Buchstaben- bzw. lautweise geöffnet wird. Diese Bewegung bietet die Möglichkeit der Verknüpfung visueller Strategien mit auditiven Vorgängen in der zerebralen Verarbeitung. Außerdem werden Aspekte des Fingerlesens in der Bewegung optimal unterstützt. Der graphische Textgesamteindruck bleibt dabei im wesentlichen erhalten, so daß ein späteres Weglassen der Lesehilfe allenfalls geringe Probleme bereitet. Sofern das erste Feld nicht einfach als freies Fenster ausgebildet ist, kann es durch transparentes, klares und farbloses Material definiert sein, insbesondere durch eine Folie und/oder eine vorzugsweise dünne Kunststoffplatte. Das zweite Feld ist dabei bevorzugt gleichfalls durch transparentes, farbiges Material definiert, insbesondere durch eine Folie und/oder Kunststoffplatte, die bevorzugt blau ist, weil sich mit dieser Farbe besonders günstige Kontraste ergeben. Andere bevorzugte Einfärbungen sind die Farben rot und/oder gelb, weil diese Primärfarben besonders hohe Erkennungserfolge bewirken. Die Ausbildung der Felder mit Folien und/oder dünnen Kunststoffplatten ist bevorzugt, weil diese flexibel sind, so daß sie beim Transport z.B. in einem Schulranzen weniger leicht zerbrochen werden.

Die beiden Felder grenzen bevorzugt längs einer geraden Linie aneinander an, und zwar so, daß sie eine zu lesende Zeile zumindest vom darunter befindlichen Text abgrenzen. Einleuchtenderweise kann das erste Feld für hohen Kontrast vollständig vom zweiten Feld umschlossen sein, so daß es als Fenster ausgebildet ist.

Es ist in einer bevorzugten Variante vorgesehen, daß auf der Lesehilfe nahe des unter dem ersten Feld sichtbaren Textteiles erste und zweite Buchstabenerkennungshilfen angeordnet sind, die zur Assoziation mit zwei vom Lernenden miteinander verwechselbaren Buchstaben ausgestaltet sind. Durch diese Ausgestaltung werden noch verbleibende Blicksprünge gezielt längs der Felder geführt und so noch sinnvoll genutzt, nämlich um den Blick auf die ersten und zweiten Buchstabenerkennungshilfen zu lenken, die durch ihre Plazierung nahe des unter dem ersten transparenten Feld sichtbaren Textteiles besonderes oft angesehen werden, wodurch diese beim Auftreten der entsprechenden Buchstaben im Text verglichen und richtig entschlüsselt werden. Auch hier bleibt der graphische Textgesamteindruck im wesentlichen erhalten, so daß ein späteres Weglassen auch dieser Form der Lesehilfe allenfalls geringe Probleme bereitet.

Die Buchstabenerkennungshilfe kann rein graphisch ausgestaltet sein, etwa durch Aufdruck von graphisch nach Art der aus den Abbildungen der vorgenannten Patentanmeldung des Anmelders gestalteten Symbolen wie Grafiken von 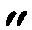 **B**all" und 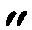 **D**ose", bevorzugt ist aber, wenn sie zur taktilen Reizung des Lernenden ausgebildet sind. Dazu können Erhebungen und/oder Einsenkungen bzw. Ausnehmungen und/oder Durchbrüche in einem hinreichend massiven Material vorgesehen und/oder Fremdkörper darin eingebettet sein. So können für die erste Buchstabenerkennungshilfe im umschlossenen Bauchbereich eines 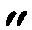 b" **B**orsten oder ein durch reliefartige Erhebung dargestellter Ball eingebettet werden, während für die zweite Buchstabenerkennungshilfe der im 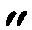 d" umschlossene Bereich als vertiefte **D**elle gebildet ist. Hierbei wird in der Regel zumindest ein Teil der Leselernhilfe nicht als Folie ausgebildet. Es ist dabei zwar möglich, aber nicht zwingend erforderlich, daß der Lesende diese Buchstabenerkennungshilfen während des Lesens dauerhaft berührt, weil ihn die Buchstabenerkennungshilfen schon bei der Handhabung der Leselernhilfe wiederholt taktil stimulieren werden, was zugleich eine verbesserte Informationsverankerung stimuliert. Durch die verbesserte und beschleunigte Informationsverankerung, insbesondere problematischer Laute und Lautzuordnungen im Gehirn, verbessert sich die Leseleistung drastisch.

Wenigstens eine Buchstabenerkennungshilfe kann nahe des Zeilenrandes angeordnet sein, so daß ein natürlicher Blicksprungstop gebildet ist, zu dem wiederholt gesprungen wird, was eine Regulierung und Begrenzung der Blicksprünge erwarten läßt. Eine weitere Buchstabenerkennungshilfe kann auf einem über die Zeile bewegliche Schieber angeordnet sein. Dieser Schieber kann unmittelbar neben eine zu lesende Textstelle geschoben werden, so daß die Blicksprungweite erheblich reduziert ist. Da in der Regel Buchstaben- oder Buchstabengruppenpaare wie 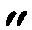 b" und 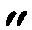 d" 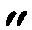 b" und 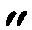 p", 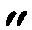 p" und 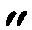 q", 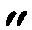 ie" und 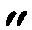 ei" miteinander verwechselt werden, ist es ausreichend, wenn nur jeweils ein Buchstabe bzw. eine Gruppe des Verwechslungspaares auf dem Schieber zum Text bewegt wird, da schon durch Vergleich mit diesem erkannt wird, um welchen Bestandteil des Paares es sich bei dem zu erkennenden Buchstaben bzw. der zu erkennenden Buchstabengruppe handelt. Die Ausbildung mit Schieber erlaubt auch die Abgrenzung bestimmter Textbestandteile. So kann je nach Grad der bereits erworbenen Lesefähigkeiten ein ganzer Satz, ein einzelnes **Wort**, ein Wort**teil** oder ein einzelner L**au**t zwischen Schieber und Randbereich der Leselernhilfe abgegrenzt werden.

Es ist möglich und bevorzugt, die erfindungsgemäße Leselernhilfe so auszugestalten, daß an zwei gegenüberliegenden Längskanten der Leselernhilfe jeweilige erste und zweite Felder mit hohem beziehungsweise verringertem Kontrast angeordnet sind, wobei der Bereich an der ersten Kante zum Erkennen einer Textzeile mit größerem und der Bereich an der zweiten Kante zum Erkennen einer Textzeile mit kleinerem Zeilenabstand angepaßt ist, um so durch Drehen der auf dem zu lesenden Text liegenden Leselernhilfe um 180°, die Verwendung mit dem ersten oder zweiten Bereich zu ermöglichen. Auf diese Weise ist ein und dieselbe Leselernhilfe sowohl für absolute als auch für bereits leicht geübte Leseanfänger geeignet und es muß weder eine Neuanschaffung noch eine Umgewöhnung zum Wechsel auf Texte mit unterschiedlichem Zeilenabstand erfolgen.

Der Schieber wird bevorzugt aus transparentem, farbigem Material gebildet, insbesondere aus demselben Material oder Material derselben Farbe wie das zweite Feld, denn wenn der Schieber mit Material derselben Farbe wie das zweite Feld gebildet ist, verkleinert er das Textfeld mit hohem Kontrast weiter, was für die Erkennung vorteilhaft ist.

In einer besonders bevorzugten Variante der Leselernhilfe weist der Schieber allgemein die Gestalt eines spiegelverkehrt S-förmigen Hakens auf. Die Hakenform selbst erlaubt es, beliebig lange Wörter abzugrenzen, indem der Hakenschenkel z.B. an das Wortende verschoben wird, wobei der Wortanfang beliebig weit vor dem Haken beginnen kann. Bevorzugt ist dabei jene Hakenausrichtung, bei welcher der Haken zum Wortanfang in der zu lesenden Zeile offen ist.

Der Schieber ist in einer besonders bevorzugten Variante abnehmbar auf einer Führung angeordnet, die die ersten und zweiten Felder aufweist. Dies hat den Vorteil, daß mit fortschreitenden Lernerfolgen der hakenförmige Schieber selbst als Leselernhilfe verwendbar ist, ohne daß noch Rückgriff auf die anfänglich unterstützenden ersten und zweiten Felder genommen werden muß. Dabei ergibt sich für den Lernenden ein schrittweiser verändernder optischer Eindruck, der aber bekannte Komponenten aufweist und so ein kontinuierliches Fortschreiten des Lernens ermöglicht.

Der hakenförmige Schieber stellt somit einerseits ein wesentliches Teil der beovrzugten Variante dar und ist andererseits auch an sich eine wichtige Leselernhilfe, für die gleichfalls Schutz begehrt wird.

Die Erfindung wird im folgenden nur beispielsweise anhand der Zeichnung beschrieben. In dieser zeigt:
- Fig.1: eine Leselernhilfe gemäß der vorliegenden Erfindung;
- Fig. 2: Einzelteile für die Leselernhilfe von Fig. 1
- Fig. 3: eine weitere Leselernhilfe gemäß der vorliegenden Erfindung;
- Fig. 4: Einzelteile für die Leselernhilfe von Fig. 3
- Fig. 5: Einzelteile einer weiteren Leselernhilfe
- Fig. 6a: die Leselernhilfe von Fig. 5 in zusammengebauter Form in erster Ausrichtung
- Fig. 6b: die Leselernhilfe von Fig. 5 in zusammengebauter Form in zweiter Ausrichtung

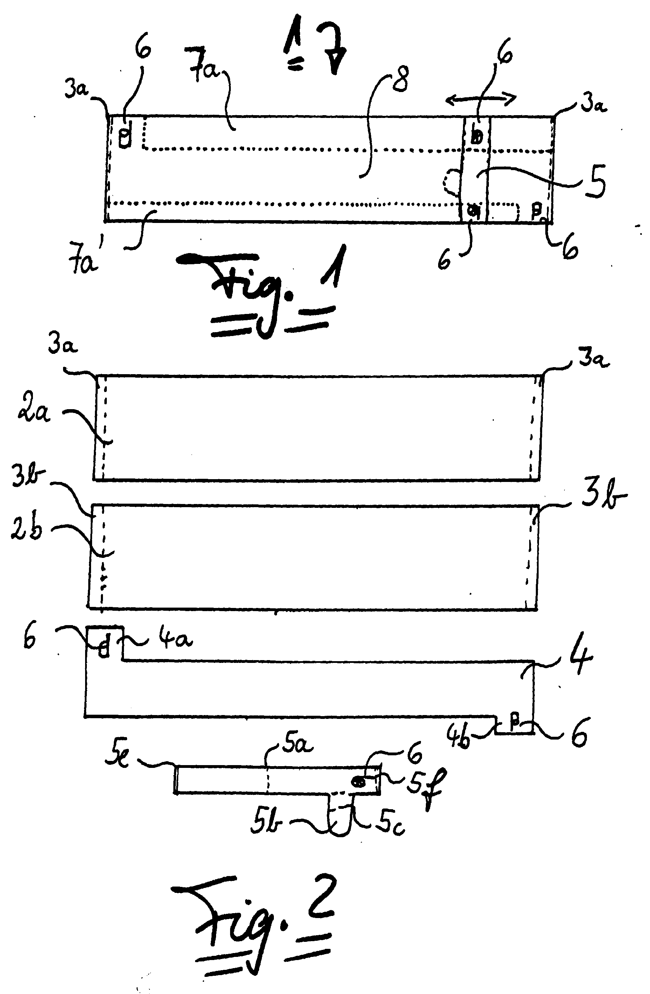

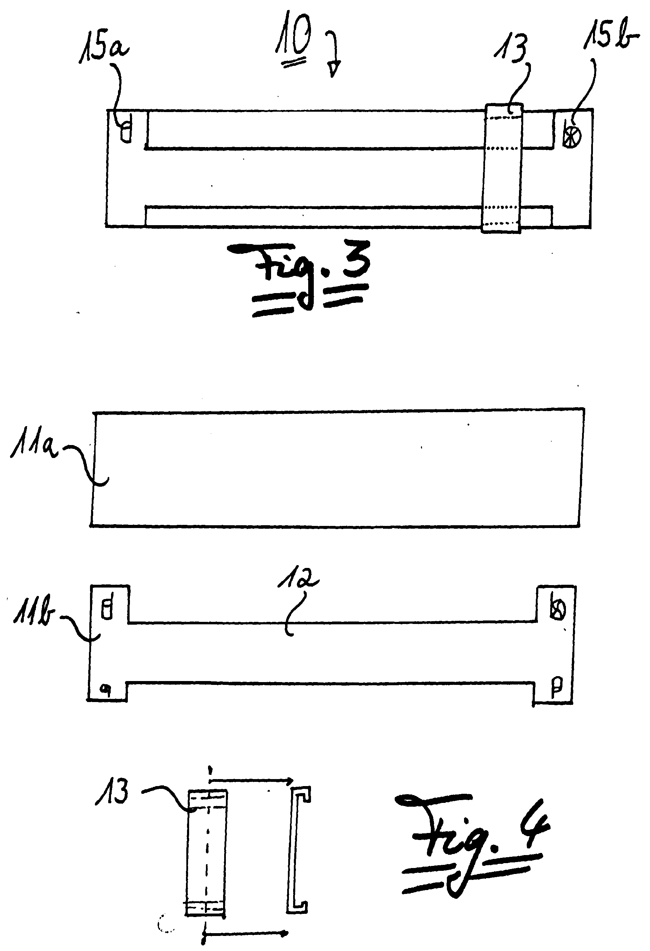

Nach Figur 1 umfaßt eine allgemein mit 1 bezeichnete Leselernhilfe 1 zwei in Deckung aufeinander angeordnete hochtransparente rechteckige Folienstücke 2a, 2b (vgl. Fig. 2a), die an ihren äußersten Rändern 3a, 3b miteinander verschweißt sind. Zwischen den hochtransparenten rechteckigen Folienstücken 2a, 2b ist ein aus eingefärbter Folie gebildetes, allgemein hakenförmiges Folienstück 4 angeordnet und mit den Folienstücken 2a, 2b an den äußersten Rändern 3a, 3b verschweißt. Über die obere transparente Folie 2a gleitet ein diese umgreifender Schieber 5, vgl. Fig. 2c. Auf dem Schieber 5 und auf den Randbereich der Folienstück 4 sitzen Buchstabenerkennungshilfen 6.

Nach Fig. 2 b ist das eingefärbte, allgemein hakenförmige Folienstück 4 länglich und hat an seinen äußeren Bereichen jeweils ein rechteckiges Ansatzstück 4a, 4b, wobei die beiden Ansatzstücke 4a, 4b in entgegengesetzte Richtungen, jeweils eines nach oben und eines nach unten, weisen. Das erste Ansatzstück 4a hat eine Breite, die einem Zeilenabstand entspricht, wie er bei völlig ungeübten Leseanfängern üblich ist. Das zweite Ansatzstück 4b hat eine demgegenüber geringere Breite, wie sie einem Zeilenabstand entspricht, der in Texten für etwas geübtere Leseanfänger üblich ist.

Der Schieber 5 besteht aus demselben Material wie die Folienstücke 4. Er weist eine längliche Form auf, die in der Mitte eine Knicklinie 5a besitzt und einen Griffansatz 5b, der an einer Knicklinie 5c ebenfalls abgebogen werden kann.

Die Leselernhilfe wird aus den in Fig. 2 gezeigten Einzelteilen wie folgt zusammengesetzt. Zunächst wird das eingefärbte, allgemein hakenförmige Folienstück 4 auf eine der zwei identischen hochtransparent-klaren Folien 2a aufgelegt. Dann wird die zweite hochtransparent-klare Folie 2a über das hakenförmige Folienstück 4 gelegt. Die Teile werden dann miteinander an den Randbereichen 3a, 3b miteinander verschweißt oder verklebt. Die Schieberfolie 5 wird längs der Linie aufeinander gefaltet, und der Griffansatz 5b hochgestellt.

Dann wird der gefaltete Schieber 5 so über die obere Folie 2a geschoben, daß diese zwischen den übereinander gefalteten Schieberteilen angeordnet ist. Die Schieberteile werden danach an den Randstellen 5e, 5f miteinander verschweißt oder verklebt. Anschließend werden auf dem Schieber 5 und über wenigstens einem der Ansätze 4a, 4b Buchstabenerkennungshilfen angebracht, und zwar in unmittelbarer Nähe des und gleicher Höhe zum transparenten Bereich.

Die so aufgebaute Leselernhilfe hat in der ersten Ausrichtung mit nach oben weisendem Feld 4a ein erstes Feld 7a aus hochtransparentem Material und ein zweites Feld 8 aus transparentem, eingefärbtem Material. In dieser Ausrichtung ist sie zum Lesen eines Textes mit sehr großen Buchstaben und entsprechendem größerem Zeilenabstand geeignet.

Wird die Leselernhilfe auf dem Text liegend um eine zur Textseite senkrechte Achse gedreht, weist das zweite Ansatzstück 4b nach oben und die Leselernhilfe ist für das Lesen eines Textes mit geringerem Zeilenabstand ausgerichtet, indem das Feld 7a' nun nach oben weist. Zum Lesen wird die Leselernhilfe auf den Text gelegt. Bei weit nach außen, entfernt zum nach oben gerichteten Ansatzstück 4a oder b verstelltem Schieber 5 ist die Leselernhilfe zum Erfassen einer ganzen Textzeile geeignet. Der Leseschüler wird so einen erhöhten Kontrast wahrnehmen, was seine Blicksprünge verringert. Restlich verbleibende Blicksprünge werden längs der Übergangslinie zwischen dem Feld 8 mit hohem Kontrast und dem Feld 7 mit geringem Kontrast auf die Buchstabenerkennungshilfen geleitet und fallen so auf die Buchstabenerkennungshilfen. Da Erkennungsschwierigkeiten mit Blicksprüngen einher gehen, fallen die Buchstabenerkennungshilfen somit genau dann in das Blickfeld, wenn sie am dringendsten benötigt werden, ohne daß es einer besonderen Konzentration hierzu bedarf.

Bei Annäherung des Schiebers 5 an das Ansatzstück 4 ist es weiter möglich, das Textfeld mit hohem Kontrast zu verkleinern, um anstelle einer ganzen Zeile nur einen Satz, ein Wort, ein Wortteil oder einen einzelnen Buchstaben abzugrenzen. Auf diese Weise kann die Leselernhilfe ohne weiteres den jeweiligen Bedürfnissen und der momentanen Konzentrationsfähigkeit seines Benutzers angepaßt werden.

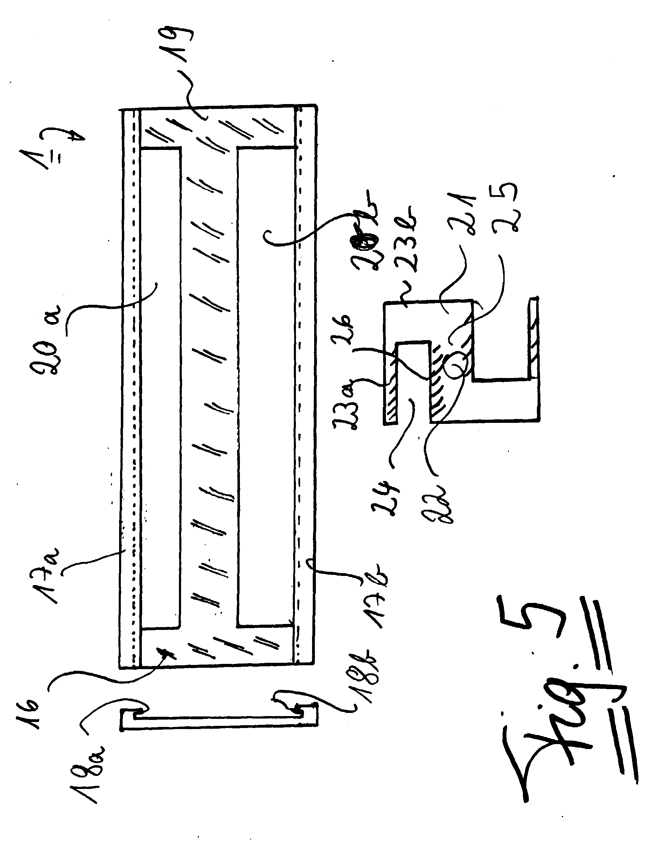

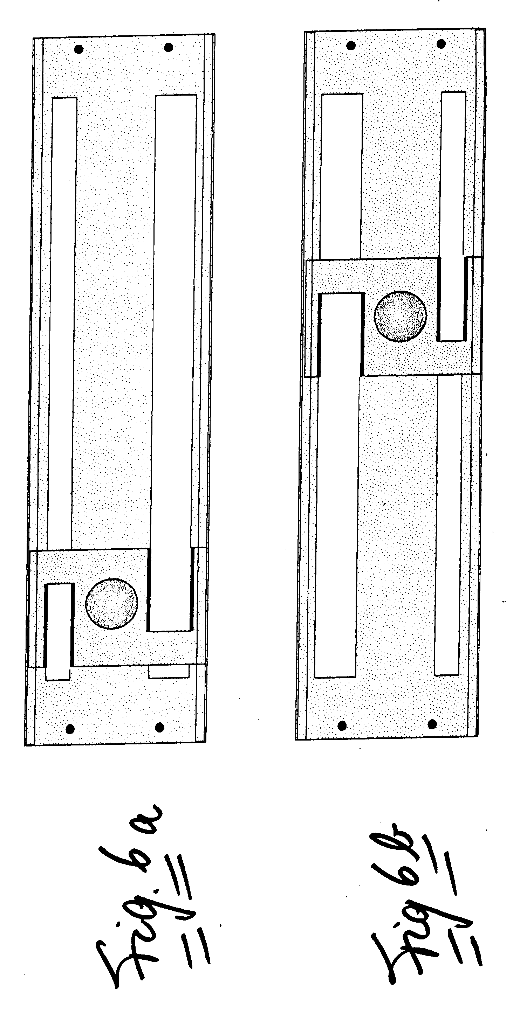

Ein weiteres Ausführungsbeispiel wird mit Bezug auf die Fig. 3 und 4 beschrieben. Nach Fig. 3 umfaßt eine allgemein mit 10 bezeichnete Leselernhilfe zwei durch Verschweißen aufeinander angeordnete hochtransparente Kunststoffplatten 11a, 11b, von welchen die erste, 11a, auf helltransparent klarem Material gebildet ist, während die untere, 11b, aus farbigem transparenten Material gebildet ist. Die untere Kunststoffplatte 11b weist allgemein die Form eines 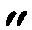 H" auf, wobei sich das 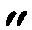 H" quer über die erste Kunststoffplatte 11a erstreckt und dabei einen breiten langgestreckten Mittelbalken 12 aufweist. Auf der oberen Kunststoffplatte gleitet ein transparenter Schieber 13, der farblich an die Einfärbung der unteren Kunststoffplatte 11b angepaßt ist und dessen Ränder die obere Kunststoffplatte ha übergreifen, so daß er auf der oberen Kunststoffplatte 11a geführt gleitet.

Der Mittelbalken 12 des 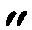 H" ist derart dimensioniert, daß sich zu den Kanten der oberen Kunststoffolie hin zwei Bereiche 14a, 14b unterschiedlicher Breite ergeben. Der erste Bereich 14a hat eine Breite, die einem bei Leseanfängern üblichen Zeilenabstand entspricht, während der zweite Bereich 14b eine demgegenüber verringerte Breite wie für geübtere Leseanfänger erforderlich aufweist. Auf den Rändern des 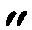 H" sind erfindungsgemäß Buchstabenerkennungshilfen 15a, 15b vorgesehen.

Zum Lesen wird die Leselernhilfe der Fig. 3 auf den Text gelegt. Der Leseschüler wird aufgrund des Kontrastunterschiedes zwischen aktueller Lesezeile und übrigem Text die Textbezüge zu weiterem Text, dazu gehörigen Bildern, Gesamttextlänge und so weiter im Auge haben und verarbeiten können, so daß sich eine gegenüber einer vollständigen Abdeckung des weiteren Textes wesentlich verbesserte Textwahrnehmung ergibt. Die jeweils aktuelle Lesezeile kann dann durch kontrastreiches Abtrennen mit dem Schieber 13 abgegrenzt und begleitet werden, wobei wiederum unerwünschte Blicksprünge unterdrückt werden, während bestimmte Textstellen, respektive Fehlerquellen, optisch klar hervorgehoben werden. Das Verschieben der Leselernhilfe auf Zeilenhöhe und zusätzliches Eingrenzen durch den konstrastherstellenden Schieber 13 kann das Textfeld optisch so verkleinern, daß anstelle einer ganzen Zeile nur ein Satzteil, ein Wort, ein Wortteil oder ein Buchstabe herausgehoben wird, ähnlich wie dies beim ersten Ausführungsbeispiel beschrieben wurde. Durch Vergleich mit den in Zeilenhöhe auf den Rändern des 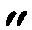 H" und/oder auf dem Schieber angebrachten Buchstabenerkennungshilfen 15a, 15b kann dann eine beim Leseschüler vorhandene Lautzuordnungsschwierigkeit durch Vergleich aufgelöst werden, was insbesondere sogar Selbstkorrekturen ermöglicht. Ein nächstes Ausführungsbeispiel wird mit Bezug auf Fig. 5 und 6 beschrieben.

Nach Fig. 5 ist eine Leselernhilfe 1 aus einer Grundplatte 16 gebildet, die an beiden Längskanten 17a, 17b je einen eine Führungsschiene 18 definierenden Übergriff aufweist. Die Grundplatte weist parallel zu ihren Längskanten auf der Grundfläche einen eingefärbten H-förmigen Bereich 19 auf, der wie der H-förmige Bereich des vorhergehenden Ausführungsbeispiels derart dimensioniert, daß sich zu den Kanten 17a, 17b hin zwei Bereiche 20a, 20b unterschiedlicher Breite ergeben. Der erste Bereich 20a hat eine Breite, die einem bei Leseanfängern üblichen Zeilenabstand entspricht, während der zweite Bereich 20b eine demgegenüber verringerte Breite wie für geübtere Leseanfänger erforderlich aufweist.

Ein Schieber 21 in der Hakenform eines allgemein spiegelverkehrten S weist eine derartige Dicke auf, daß er in den Führungsschienen 18 gleiten kann. In der Mitte des Hakens ist eine Fingermulde 22 oä., an welcher der Haken längs der Schienen bewegt werden kann. Die Schenkel 23a, 23b der einen Hakenseite sind so bemaßt, daß ein Freiraum 24 zwischen der Hakenmitte 25 und dem oberen Hakenschenkel 23a verbleibt, daß seine Breite jener des Bereiches 20a entspricht. Analog ist auf der gegenüberliegenden Hakenseite ein Freiraum entsprechend der Breite 20b vorgesehen. Der Randbereich 26 der Hakenschenkel ist an den Kanten eingefärbt.

Der Haken wird vor der Benutzung durch einen vollständig odernahezu ungeübten Leseanfänger in die Führungsschienen gesetzt. Dann wird die Leselernhilfe über dem Text angeordnet und zur Wortabgrenzung während des Lesens zur Erzielung geeigneter Abgrenzungen mit dem Finger bewegt. Die Ausrichtung wird bei völligen Leseanfängern, die große Zeilenabstände benötigen, so sein, wie in Fig. 6b gezeigt, während sie mit fortschreitenden Lesekenntnissen und enger werdenden Zeilenabständen wie in Fig. 6a sein wird. In beiden Fällen wird die Fingerbewegung des Schiebers in Verbindung mit der verbesserten visuellen Erkennbarkeit des Textes gute Leseerfolge erbringen.

Mit fortschreitenden Lesekenntnissen kann dann der Schieber aus der Führung entfernt und separat benutzt werden.

Es sei erwähnt, daß anstelle einer H-förmigen Einfärbung auch eine Folie auf einen Grundkörper aufgebracht werden kann und/oder das erste Feld als Fenster in eingefärbtem Material vollständig frei belassen bleiben kann.

Die beschriebenen Anti-Legasthenie-Mittel eignen sich zur Alphabetisierung und sind besonders gut geeignet für Legasteniker und andere Leseschwache.

Im übrigen ist es möglich, eine Leselernhilfe, anders als in den vorbeschriebenen Beispielen, auch ohne Schieber auszugestalten. Die Buchstabenerkennungshilfen 15a, 15b sitzen dann beidseits des klaren Feldes auf den Rändern.

Es ist einsichtig, daß die hohe Transparenz des ersten Sichtfeldes es zudem ermöglicht, zwei identische Leselernhilfe gekreuzt zu verwenden, so daß ein Schieber schon deshalb entbehrlich wird.

Im übrigen ist es insbesondere für sehbehinderte Leseanfänger besonders vorteilhaft, den Leselernhilfe-Grundkörper und / oder den Schieber als Lupe auszubilden.

## Patentansprüche

1. Leselernhilfe zum Auflegen auf einen zu lesenden Text mit einem ersten Feld, durch welches zumindest ein Teil einer zu lesenden Textzeile gut und mit hohem Kontrast zu erkennen ist, einem zweiten Feld, durch welches später bzw. derzeit nicht zu lesender Text in der Nähe des ersten Textteiles mit verringertem Kontrast und/oder schlechter zu erkennen ist, sowie einem Schieber, der dazu ausgebildet ist, mittels Finger längs der zu lesenden Textzeile verschoben zu werden und dabei Teile des ersten Feldes abzugrenzen.

2. Leselernhilfe nach dem vorhergehenden Anspruch, dadurch gekennzeichnet, daß das erste Feld durch transparentes, klares und zumindest im wesentlichen farbloses Material und/oder das zweite Feld durch transparentes, farbiges Material definiert ist, wobei das jeweilige Material bevorzugt durch eine starke Folie oder eine Kunststoffplatte gebildet ist.

3. Leselernhilfe nach einem der vorhergehenden Ansprüche, dadurch gekennzeichnet, daß die Breite des ersten Feldes zumindest weitgehend einer ganzen Zeile entspricht.

4. Leselernhilfe nach einem der vorhergehenden Ansprüche, dadurch gekennzeichnet, daß die beiden Felder zumindest im wesentlichen längs einer geraden Linie aneinander grenzen und zwar bevorzugt dergestalt, daß die Grenzlinie bei korrekter Ausrichtung der Leselernhilfe zumindest im wesentlichen in Zeilenrichtung verläuft.

5. Leselernhilfe nach dem vorhergehenden Anspruch, dadurch gekennzeichnet, daß auf der Lesehilfe nahe des unter dem ersten Feld sichtbaren Textteiles erste und zweite Buchstabenerkennungshilfen angeordnet sind, die zur Assoziation mit zwei vom Lernenden miteinander verwechselbaren Buchstaben ausgestaltet sind, wobei bevorzugt wenigstens eine Buchstabenerkennungshilfe zur visuellen und/oder taktilen Reizung des Lernenden ausgebildet, insbesondere durch Erhebungen und/oder Einsenkungen und/oder Einbettung von wenigstens einem Fremdkörper in einem hinreichend massiven Material vorgesehen ist, wobei bevorzugt zumindest eine Buchstabenerkennungshilfe durch Abbildung eines von mit dem zu erkennenden Buchstaben beginnenden Begriffes realisiert ist.

6. Leselernhilfe nach dem vorhergehenden Anspruch, dadurch gekennzeichnet, daß wenigstens eine Buchstabenerkennungshilfe nahe des Zeilenrandes und/oder auf dem über die Zeile beweglichen Schieber angeordnet ist.

7. Leselernhilfe nach einem der vorhergehenden Ansprüche, dadurch gekennzeichnet, daß an zwei gegenüberliegenden Längskanten der Leselernhilfe jeweilige erste und zweite Felder mit hohem beziehungsweise verringertem Kontrast angeordnet sind, wobei der Bereich an der ersten Kante zum Erkennen einer Textzeile mit größerem und der Bereich an der zweiten Kante zum Erkennen einer Textzeile mit kleinerem Zeilenabstand angepaßt ist, um so durch Drehen der auf dem zu lesenden Text liegenden Leselernhilfe um 180° die Verwendung mit dem ersten oder zweiten Bereich zu ermöglichen.

8. Leselernhilfe nach dem vorhergehenden Anspruch, dadurch gekennzeichnet, daß der Schieber aus transparentem, farbigem Material gebildet ist.

9. Leselernhilfe nach dem vorhergehenden Anspruch, dadurch gekennzeichnet, daß der Schieber mit Material derselben Farbe wie das zweite Feld gebildet ist.

10. Leselernhilfe nach einem der vorhergehenden Ansprüche, dadurch gekennzeichnet, daß der Schieber allgemein Hakenform aufweist, wobei der Haken insbesondere zum Wortanfang in der zu lesenden Zeile offen ist.

11. Leselernhilfe nach einem der vorhergehenden Ansprüche, dadurch gekennzeichnet, daß der Schieber abnehmbar auf einer Führung angeordnet ist.

12. Leselernhilfe in Form eines längs der Zeile mittels Finger hin- und her beweglichen Schiebers, der allgemein Hakenform aufweist und insbesondere zum Wortanfang in der zu lesenden Zeile offen ist.
